(19) Europäisches Patentamt
European Patent Office
Office européen des brevets

(11) **EP 2 612 002 B1**

(12) **EUROPEAN PATENT SPECIFICATION**

(45) Date of publication and mention
of the grant of the patent:
**12.10.2016 Bulletin 2016/41**

(21) Application number: **11822215.7**

(22) Date of filing: **24.08.2011**

(51) Int Cl.:
*F01N 9/00* (2006.01)   *F01N 3/025* (2006.01)
*F01N 3/10* (2006.01)   *F01N 3/023* (2006.01)
*F02D 41/02* (2006.01)   *F01N 3/035* (2006.01)
*F02D 41/14* (2006.01)   *F02D 41/18* (2006.01)

(86) International application number:
**PCT/SE2011/051017**

(87) International publication number:
**WO 2012/030280 (08.03.2012 Gazette 2012/10)**

(54) **METHOD AND SYSTEM FOR EXHAUST EMISSION CONTROL**

VERFAHREN UND SYSTEM ZUR STEUERUNG EINER ABGASREINIGUNG

PROCÉDÉ ET SYSTÈME DE COMMANDE D'ÉMISSION DES GAZ D'ÉCHAPPEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2010 SE 1050893**

(43) Date of publication of application:
**10.07.2013 Bulletin 2013/28**

(73) Proprietor: **Scania CV AB (publ)
151 87 Södertälje (SE)**

(72) Inventors:
• **KARLSSON, Carl-Johan
S-112 40 Stockholm (SE)**

• **TELBORN, Klas
S-152 71 Södertälje (SE)**

(74) Representative: **Scania CV AB
Patents, GP 117kv
151 87 Södertälje (SE)**

(56) References cited:
**EP-A2- 1 582 709      DE-A1-102006 021 303
FR-A1- 2 863 654      US-A1- 2004 123 586
US-A1- 2004 187 477      US-A1- 2004 187 477
US-A1- 2005 143 899      US-A1- 2006 016 179
US-A1- 2006 016 179      US-A1- 2007 068 148
US-A1- 2007 068 148      US-A1- 2008 155 965
US-A1- 2010 050 607**

**Description**

**Field of the invention**

The present invention relates to particle filters and in particular to a method for regulation of a temperature in a particle filter according to the preamble of claim 1. The invention relates also to a system adapted to effecting regulation of a temperature in a particle filter according to the preamble of claim 17. The invention relates also to a computer programme for applying the method and to a vehicle provided with the system.

**Background to the invention**

Growing official concern about pollution and air quality, especially in urban areas, has led to the adoption of emission standards and rules in many jurisdictions.

Such emission standards often set requirements which define acceptable limits for exhaust discharges from vehicles equipped with combustion engines. These standards often regulate, for example, levels of discharge of nitrogen oxides ($NO_x$), hydrocarbons (HC), carbon monoxide (CO) and particles from most types of vehicles.

The endeavour to meet such emission standards has led to ongoing research with a view to reducing emissions by means of post-treatment (cleaning) of the exhaust gases which arise from combustion in a combustion engine.

One way to post-treat exhaust gases from a combustion engine is a so-called catalytic cleaning process, so vehicles and many other at least large means of transport powered by combustion engines are usually also provided with at least one catalyst.

Post-treatment systems may also, either alternatively or in combination with one or more catalysts, comprise other components, e.g. particle filters. There are also cases where particle filters and catalysts are integrated with one another.

Combustion of fuel in the cylinders of a combustion engine results in the formation of soot particles. Particle filters are used to capture these soot particles, and work in such a way that the exhaust flow is led through a filter structure whereby soot particles are captured from the passing exhaust flow and are stored in the particle filter.

The particle filter fills with soot progressively during vehicle operation, and has sooner or later to be emptied of it, which is usually achieved by so-called regeneration. As indicated below, the present invention may be used inter alia in regeneration. In this specification, the invention will therefore, to enable it to be exemplified, be mainly described for its application in regeneration. The invention is nevertheless in no way restricted to that application, as also indicated below.

Regeneration involves the soot particles, which mainly consist of carbon particles, being converted to carbon dioxide and/or carbon monoxide in one or more chemical processes, which regeneration may in principle be effected in two different ways. One way is regeneration by so-called oxygen ($O_2$) based regeneration, also called active regeneration. In active regeneration, the fuel is added to the exhaust gases and is intended to burn up in an oxidation catalyst situated upstream from the particle filter. In active regeneration, carbon is converted by oxygen to carbon dioxide and water.

This chemical reaction requires relatively high particle filter temperatures for desired reaction rates (filter emptying rates) to be achieved at all.

Instead of or, in conjunction with, active regeneration, it is possible to apply $NO_2$ based regeneration, also called passive regeneration. In passive regeneration, nitrogen oxides and carbon oxides are formed by a reaction between carbon and nitrogen dioxide. The advantage of passive regeneration is that desired reaction rates, and hence the rate at which the filter is emptied, can be achieved at significantly lower temperatures.

Under certain conditions, not all of the aforesaid fuel which in active regeneration is added to the exhaust gases is burnt in the oxidation catalyst, so a certain amount of that fuel reaches the particle filter. The amount of fuel reaching the filter needs to be burnt in it in order to comply with established hydrocarbon emission requirements.

However, heat is generated during the combustion of the fuel both in the oxidation catalyst and in the particle filter by the chemical reaction involved in the combustion (see equation 1 below). The reaction rate for this chemical reaction increases exponentially with the temperature, which means that it quickly becomes uncontrollable at increasing temperatures which may well rise higher than the filter structure can tolerate, with consequent risk of melting the filter structure. It is therefore extremely important that the temperature of the particle filter be kept at a substantially uniform level at which the combustion proceeds quickly enough while at the same time uncontrolled temperature rise is prevented.

US2008/0155965A1 discloses a controller determining the average bed temperature of a particulate filter and calculating the target maximum bed temperature based on this average bed temperature for regeneration of the filter used in an exhaust gas treatment system comprising a Diesel Oxidation Catalyst followed by a particulate filter with thermistors up- and downstream of both the oxidation catalyst and the particle filter.

**Summary of the invention**

An object of the present invention is to propose a method for regulation of a temperature in a particle filter. This object is achieved by the aforesaid method according to the characterising part of claim 1. The object is also achieved by the aforesaid system according to the characterising part of claim 16.

This object is also achieved by the aforesaid computer programme and the aforesaid vehicle.

The present invention utilises a relationship between the inlet temperature $T_{in\_DPF}$ to the particle filter and the actual temperature $T_{DPF}$ in the filter, which indicates how the filter temperature $T_{DPF}$ changes relative to changes in the inlet temperature $T_{in\_DPF}$. The relationship depends on the HC slip, i.e. the amount of fuel which passes through the oxidation catalyst without being burnt and then reaches the particle filter, in which it burns. The present invention therefore caters for the heat generated when this unburnt fuel burns in the filter.

Basing the regulation of the inlet temperature $T_{in\_DPF}$ on this relationship makes it possible for the temperature $T_{DPF}$ in the particle filter to be regulated indirectly via the inlet temperature $T_{in\_DPF}$. According to the invention, on the basis of the relationship, the inlet temperature $T_{in\_DPF}$ is therefore adjusted upwards and downwards in value, which means that the temperature $T_{DPF}$ in the particle filter can be kept substantially constant around its target level.

This is of great advantage in that the problem of the thermal inertia of the filter system is reduced, since the regulation is then applied to the inlet temperature $T_{in\_DPF}$, so about 75% of the mass of the filter system, i.e. the surplus mass due to the particle filter itself, does not contribute to the thermal inertia. The response time is thus shortened by about 75%, greatly reducing the regulating problems.

The shortened response time means that the inlet temperature $T_{in\_DPF}$ can be regulated so that the temperature $T_{DPF}$ in the particle filter can be kept at substantially the same level, e.g. during the active stage of a regeneration of the filter. The temperature $T_{DPF}$ in the particle filter may therefore, by applying the invention, be caused to be at a level which both ensures effective regeneration and prevents unacceptable temperature rise.

The present invention is generally applicable in substantially all applications where fuel is added to the exhaust flow and where it is desired to follow a temperature profile with small variations of temperatures in the particle filter and/or temperatures after the filter. The invention may therefore be used to protect the filter, and also components downstream from it, e.g. a downstream catalyst, against high temperatures.

Further characteristics of the present invention and advantages thereof are indicated by the detailed description set out below of embodiment examples and the attached drawings.

**Brief description of the drawings**

Fig. 1a   depicts a power train of a vehicle in which the present invention may with advantage be used.

Fig. 1b   depicts an example of a control unit in a vehicle control system.

Fig. 2   depicts an example of a post-treatment system of a vehicle in which the present invention may with advantage be used.

Fig. 3a   depicts examples of temperature profiles during regeneration.

Fig. 3b   depicts examples of temperature profiles during regeneration.

Fig. 4   is a flowchart for a method according to the invention.

**Detailed description of preferred embodiments**

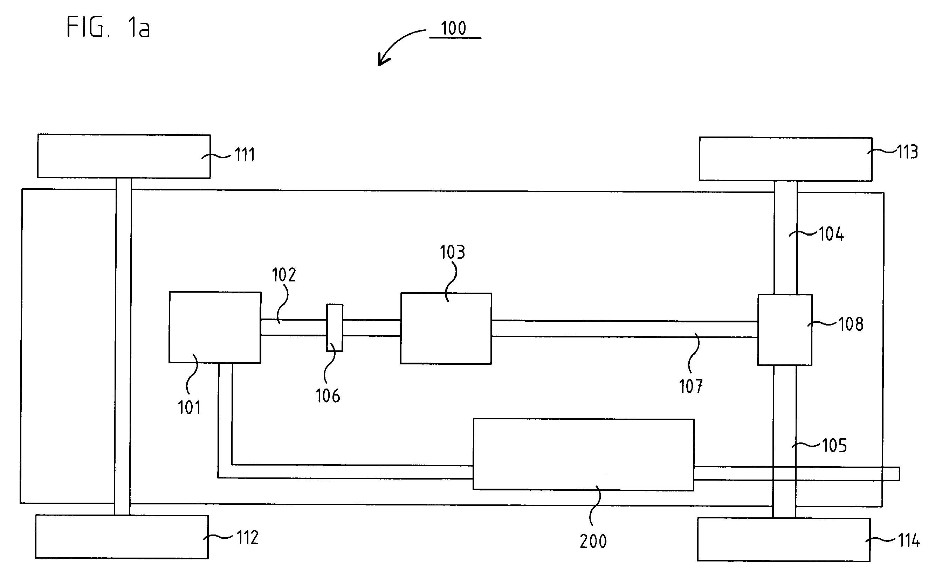

Fig. 1a depicts schematically a heavy vehicle 100, e.g. a truck, bus or the like, according to an example of an embodiment of the present invention. The vehicle 100 schematically depicted in Fig. 1a comprises a pair of forward wheels 111, 112 and a pair of powered rear wheels 113, 114. The vehicle further comprises a power train with a combustion engine 101 connected in a conventional way, by an output shaft 102 of the engine 101, to a gearbox 103, e.g. via a clutch 106.

An output shaft 107 from the gearbox 103 drives the powered wheels 113, 114 via a final gear 108, e.g. a conventional differential, and driveshafts 104, 105 which are connected to said final gear 108.

The vehicle 100 further comprises a post-treatment (exhaust cleaning) system 200 for treatment (cleaning) of exhaust discharges from the engine 101.

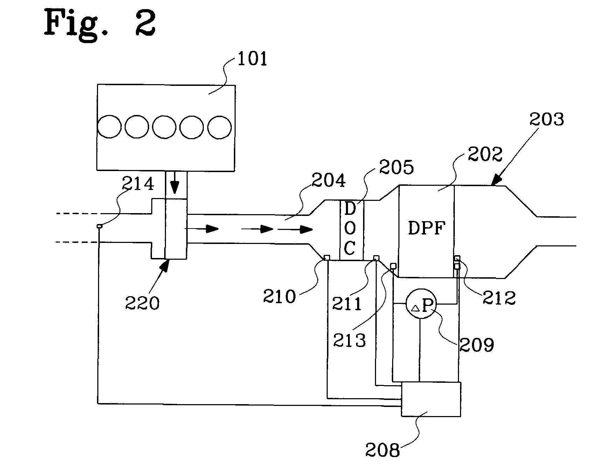

The post-treatment system is depicted in more detail in Fig. 2. The diagram illustrates the engine 101 of the vehicle 100, in which the exhaust gases generated by the combustion are led via a turbo unit 220 (in turbo engines the exhaust flow arising from the combustion often drives a turbo unit used to compress the incoming air for the combustion in the cylinders). The function of turbo units is very well known and is therefore not described in more detail here. The exhaust flow is then led via a pipe 204 (indicated by arrows) to a particle filter 202 via an oxidation catalyst (diesel oxidation catalyst, DOC) 205.

The catalyst DOC 205 has several functions and utilises the surplus air to which the diesel engine process generally gives rise in the exhaust flow as a chemical reagent in conjunction with a noble metal coating in the catalyst. The catalyst is normally used primarily to oxidise remaining hydrocarbons and carbon monoxide in the exhaust flow to carbon dioxide and water.

The catalyst may however also oxidise to nitrogen dioxide ($NO_2$) a large proportion of the nitrogen monoxides (NO) present in the exhaust flow. Further reactions may also take place in the catalyst.

In the embodiment depicted of the exhaust cleaning system, DOC 205 and DPF 202 are integrated in a combined exhaust cleaning unit 203. It should however be noted that DOC 205 and DPF 202 need not be integrated in a combined exhaust cleaning unit but may instead be arranged in some other way found appropriate. For example, DOC 205 may be situated nearer to the engine 101.

The post-treatment system set-up depicted in Fig. 2 usually occurs in heavy vehicles, at least in jurisdictions where stringent emission requirements apply, but as an alternative to the oxidation catalyst the particle filter may instead comprise noble metal coatings so that the chemical processes which occur in the oxidation catalyst occur instead in the particle filter, in which case the post-treatment system therefore has no DOC 205.

As previously mentioned, the combustion in the engine 101 results in the formation of soot particles. These soot particles need not, and are in many cases not allowed to, be discharged into the surroundings of the vehicle. Diesel particles consist of hydrocarbons, carbon (soot) and inorganic substances such as sulphur and ash. As mentioned above, these soot particles are therefore captured by the particle filter 202, which works in such a way that the exhaust flow is led through a filter structure in which soot particles are captured from the passing exhaust flow in order to be stored in the filter. A very large proportion of the particles may be separated from the exhaust flow by the filter 202.

The particles thus separated from the exhaust flow therefore accumulate in the particle filter 202, causing it to fill with soot over time. Depending on factors such as current driving conditions, the driver's mode of driving and vehicle's load, a larger or smaller amount of soot particles will be generated, so this filling will take place more or less quickly, but when the filter reaches a certain level of filling it needs "emptying". If the filter is full to too high a level the vehicle's performance may be affected and there may also be fire hazards due to soot accumulation in combination with high temperatures.

As above, emptying the particle filter 202 is done by regeneration whereby soot particles, carbon particles, are converted in a chemical process to carbon dioxide and/or carbon monoxide. Over time the filter 202 has therefore to be regenerated at more or less regular intervals, and determining suitable times for its regeneration may for example be by means of a control unit 208 which may for example determine a suitable time or times at least partly on the basis of signals from a pressure sensor 209 which measures the differential pressure across the filter. The fuller the filter becomes, the higher the pressure difference across it will be.

Determination of regeneration timing may also be affected by current temperatures before and/or after the oxidation catalyst 205 and/or before and/or after the particle filter 202. These temperatures may for example be determined by means of temperature sensors 210-212.

No regeneration action is normally taken so long as the filter's filling level remains below some predetermined level. For example, the control system's control of filter regeneration may be so arranged that no action is taken so long as the filter's degree of filling is for example below some suitable level within the range 60-80%. The degree of filling may be estimated in any suitable way, e.g. on the basis of differential pressure as above, in which case a certain pressure difference will represent a certain degree of filling.

The control unit 208 also controls the regulation of the temperature in the particle filter according to the present invention, as described in more detail below.

Generally, control systems in modern vehicles usually comprise a communication bus system consisting of one or more communication buses for connecting together a number of electronic control units (ECUs), or controllers, and various components located on the vehicle. Such a control system may comprise a large number of control units, and the responsibility for a specific function may be divided among two or more of them.

For the sake of simplicity, Fig. 2 depicts only the control unit 208, but vehicles of the type depicted often have a relatively large number of control units, e.g. for control of engine, gearbox etc., as is well known to specialists within the technical field.

The present invention may be implemented in the control unit 208 but may also be implemented wholly or partly in one or more other control units with which the vehicle is provided. Control units of the type depicted are normally adapted to receiving sensor signals from various parts of the vehicle, e.g., as depicted in Fig. 2, said pressure sensor 209 and temperature sensors 210-212, and also, for example, an engine control unit (not depicted). The control signals generated by control units normally depend also both on signals from other control units and on signals from components. For example, the control exercised by the control unit 208 over regeneration according to the present invention may for example depend on information received for example from the engine control unit and the temperature/pressure sensors depicted in Fig. 2.

Control units of the type depicted are also usually adapted to delivering control signals to various parts and components of the vehicle, e.g. in the present example to the engine control unit to demand/order control of the engine's combustion as below.

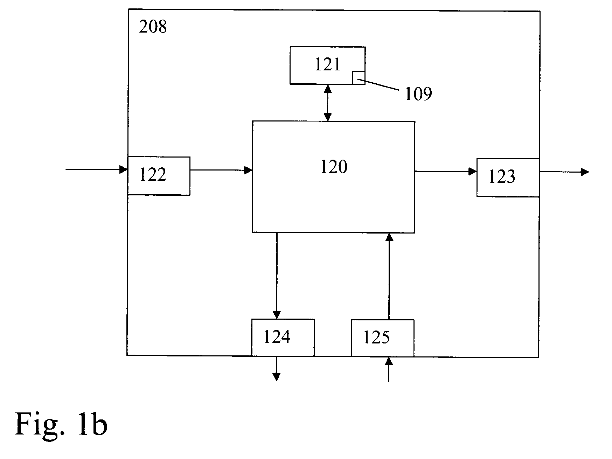

The control is often governed by programmed instructions. These instructions take typically the form of a computer programme which, when executed in a computer or control unit, causes the computer/control unit to effect desired forms of control action, e.g. method steps according to the present invention. The computer programme usually takes the form of a computer programme product 109 which is stored on a digital storage medium 121 (see Fig. 1b), e.g. ROM (read-only memory), PROM (programmable read-only memory), EPROM (erasable PROM), flash memory, EEPROM (electrically erasable PROM), a hard disc unit etc., in or connected to the control unit, and which is executed by the control unit. The vehicle's behaviour in a specific situation may thus be adjusted by altering the computer programme's instructions.

An example of a control unit (the control unit 208) is depicted schematically in Fig. 1b, which control unit 208 may itself comprise a calculation unit 120 which may take the form of substantially any suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which provides it with, for example, the stored programme code 109 and/or the stored data which the calculation unit 120 needs for it to be able to perform calculations. The calculation unit 120 is also arranged to store partial or final results of calculations in the memory unit 121.

The control unit 208 is further provided with respective devices 122, 123, 124, 125 for receiving and sending input and output signals. These input and output signals may comprise waveforms, pulses or other attributes which the input signal receiving devices 122, 125 can detect as information and which can be converted to signals which the calculation unit 120 can process.

These signals are thereafter conveyed to the calculation unit 120. The output signal sending devices 123, 124 are arranged to convert signals received from the calculation unit 120 in order, e.g. by modulating them, to create output signals which can be conveyed to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, a MOST (Media Orientated Systems Transport) bus or some other bus configuration, or a wireless connection.

As above, regeneration may in principle be effected in two different ways. One way is by so-called oxygen ($O_2$) based regeneration, also called active regeneration. In active regeneration, the soot load in the particle filter 202 is normally burnt substantially completely. After such total regeneration, the filter's soot content will be substantially 0 grams.

In active filter systems, fuel is added to the exhaust gases and is intended to be oxidised across the catalyst 205, which is situated upstream from the particle filter 202. When the fuel burns, heat is generated and a chemical process substantially according to equation 1 takes place in the filter 202:

$$C + O_2 \rightarrow CO_2 + heat \qquad\qquad (eq. 1)$$

Active regeneration thus converts carbon plus oxygen gas to carbon dioxide plus heat. However, this chemical reaction is very temperature-dependent and requires relatively high particle filter temperatures for acceptable reaction rates to be achieved at all. A lowest filter temperature of 500°C is typically required, but a still higher temperature is preferable for regeneration to take place at desired rates.

The reaction according to equation 1 takes place at high rates between 550°C and 650°C and increases exponentially with the temperature, which means that it quickly becomes uncontrollable at increasing temperatures.

The maximum temperature usable in active regeneration is often limited by tolerances of the components concerned. For example, the particle filter 202 often has design limitations with regard to the maximum temperature to which the components may be subjected. For example, the filter 202 and/or any active coatings applied to it may be destroyed by, for example, melting at temperatures over 650°C if much soot has accumulated in the filter, since its structure will not tolerate higher temperatures than that.

This means that active regeneration may, owing to components affected, be subject to an unacceptably low maximum permissible temperature. At the same time, a very high lowest temperature is therefore required for usable reaction rates to be achieved at all.

The temperature after the filter 202 may also be limited because of sensitive components situated downstream of it.

For example, at least one catalyst may be situated downstream of the filter in certain exhaust cleaning systems. These components may then need to be protected against temperatures which exceed a maximum temperature limit during the regeneration process.

It is therefore very important to be able to regulate the temperature in the particle filter so that it is close to a desired set-point temperature which is normally within the range 400°C to 650°C, depending on nearby components in the exhaust flow and on desired regeneration strategy, i.e. passive and/or active regeneration.

In volume and cost terms it is disadvantageous for the catalyst 205 to be so large that it copes with oxidising all of the fuel which is added for active regeneration. In practice, the reaction in the catalyst will therefore resemble

$$\mathtt{HC\ +\ O_2\ \blacktriangleright\ HC\ +\ H_2O\ +\ CO_2\ +\ heat} \qquad\qquad (eq.\ 2)$$

The term HC resulting from the reaction represents here the amount of fuel which passes unburnt through the catalyst 205, sometimes called the "HC slip". The amount of unburnt fuel depends inter alia on the exhaust flow and the amount of fuel added. If for example a driver of the vehicle applies increased acceleration, the flow increases and the amount of HC slip changes accordingly.

The particle filter 202 is therefore often coated with an active material to be able to oxidise the fuel which passes unburnt through the oxidation catalyst 205. The active coating also improves passive regeneration in the filter. As part of the added fuel, i.e. the HC slip, burns only in the particle filter, it is only thereafter that all of the energy in the fuel will have been converted to heat. In practice it is therefore only at a point immediately downstream of it that the temperature of the filter which results from the added fuel is known.

Moreover, a normally dimensioned filter system, comprising an oxidation catalyst 205 and a particle filter 202, for a large motor vehicle, e.g. a truck or a bus, is of considerable weight. A non-limitative example which may be cited is that such a filter system for a vehicle with an engine volume of about 9 to 16 litres weighs about 15 to 25 kg. This considerable weight makes the filter system thermally sluggish such that a considerable amount of energy is required to raise its temperature by 1°C. This thermal inertia results in a filter system which is difficult to regulate, since the response time of the filter system comprising the catalyst 205 and the filter 202 will be considerable, e.g. the response time may be several minutes when there is a low exhaust mass flow. Nor would measurement at a point after the filter reflect accurately the conditions within it.

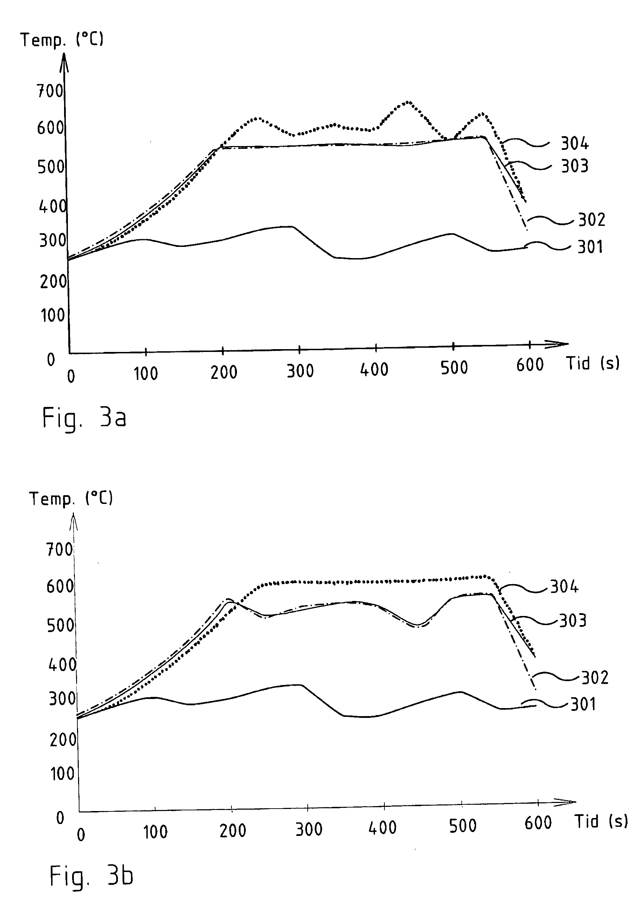

Figure 3a shows examples of temperature profiles during regeneration, illustrating the above problem with previous known forms of temperature regulation. Here the thick continuous curve 301 represents $T_{in\_DOC}$, which is an inlet temperature to the oxidation catalyst 205 and may be measured by a temperature sensor 210 situated upstream from the catalyst and in contact with the exhaust gases. The chain-dotted curve 302 represents $T_{in\_DPF\_bör}$, which is a set-point value for an inlet temperature to the particle filter 202.

The thin continuous curve 303 represents $T_{in\_DPF}$, which is an inlet temperature, i.e. an actual inlet temperature, to the particle filter 202. The dotted curve 304 represents $T_{DPF}$, the temperature in the particle filter 202.

Figure 3a clearly shows the filter temperature $T_{DPF}$ 304 varying greatly when regulation is based on a substantially constant set-point value for an inlet temperature to the filter 202, i.e. a curve 302 for $T_{in\_DPF\_bör}$ which is substantially constant during the regeneration. Here the temperature 304 in the particle filter fluctuates in an unacceptable way because of the varying effectiveness of the catalyst 205 with regard to fuel combustion, i.e. depending on the HC slip. Owing to the thermal inertia of the filter system, these large fluctuations of the filter temperature 304 are difficult to counteract with previous known forms of regulation.

According to the present invention, the particle filter 202 has an inlet temperature $T_{in\_DPF}$ which is determined at a point between the oxidation catalyst 205 and the particle filter, e.g. by the temperature sensor 211 which is in contact with the exhaust gases, or by a model for the inlet temperature $T_{in\_DPF}$. A relationship between this inlet temperature $T_{in\_DPF}$ and the filter temperature $T_{DPF}$ is defined according to the invention. The relationship forms part of a model of the fuel combustion function of the oxidation catalyst 205. This relationship depends on an amount of fuel which passes unburnt through the catalyst, i.e. it depends on the HC slip. The inlet temperature $T_{in\_DPF}$ is then regulated on the basis of this relationship, thereby keeping the filter temperature $T_{DPF}$ substantially around a predetermined target level for a defined period of time.

When the invention is used for regulation, the predetermined target level is typically a suitable working temperature for the regeneration, within the range 400°C to 650°C, as mentioned above. The defined period of time represents here a time corresponding to an active stage of the regeneration, the stage of it in which good soot combustion is achieved. The defined period of time needs to be long enough for the desired regeneration to be completed. In other words, it has to be long enough for the resulting soot load after the regeneration to be at a desired level. The regulation is therefore conducted here such that the temperature $T_{DPF}$ in the particle filter 202 is kept substantially constant around a target level appropriate to good soot combustion during the active stage of the filter's regeneration.

As the defined relationship determines a relation between the inlet temperature $T_{in\_DPF}$ to the particle filter and the actual temperature $T_{DPF}$ in the particle filter, i.e. it expresses whether the filter temperature $T_{DPF}$ changes if the inlet temperature $T_{in\_DPF}$ changes, the relationship can be used to regulate the temperature $T_{DPF}$ in the filter indirectly via its inlet temperature $T_{in\_DPF}$.

Using the relationship which caters for the HC slip to thus regulate the temperature $T_{DPF}$ in the particle filter 202 indirectly by regulating its inlet temperature $T_{in\_DPF}$ reduces the problem of the filter system's thermal inertia. This is because the regulation is here based on the inlet temperature $T_{in\_DPF}$ to the filter, i.e. the temperature after the oxidation catalyst 205. The catalyst accounts for only about 25% of the mass of the filter system, so in regulation according to the invention the remaining about 75% of its mass which is accounted for by the particle filter 202 does not contribute to the thermal inertia. The response time is thus reduced by substantially 75%. The filter's addition to the thermal inertia is thus excluded by regulation based on the relationship, thereby greatly reducing the regulating problem.

The relationship is thus used to regulate the inlet temperature $T_{in\_DPF}$ such that the temperature $T_{DPF}$ in the particle filter can be kept at substantially the same level during the active stage of its regeneration. In other words, the relationship can be used to regulate the temperature $T_{DPF}$ in the particle filter indirectly via its inlet temperature $T_{in\_DPF}$ so that a substantially constant temperature $T_{DPF}$ in the filter is achieved during the active part of the regeneration.

An example of regulating the temperature in the particle filter 202 according to the invention is illustrated in Figure 3b. As in Figure 3a, the thick continuous curve 301 represents $T_{in\_DOC}$, which is an inlet temperature to the oxidation catalyst 205. The chain-dotted curve 302 represents $T_{in\_DPF\_bör}$, which is a set-point value for an inlet temperature to the particle filter 202. The thin continuous curve 303 represents $T_{in\_DPF}$, which is an inlet temperature, i.e. an actual inlet temperature, to the filter 202. The dotted curve 304 represents $T_{DPF}$, which is the temperature in the filter 202.

As may be seen in Figure 3b, the temperature $T_{DPF}$ 304 of the particle filter is kept substantially constant around 600°C during the active part of the regeneration by instead regulating the inlet temperature $T_{in\_DPF}$ 303 upwards and downwards in value. The regulation of the inlet temperature $T_{in\_DPF}$ 303 is based here on the defined relationship and therefore caters for the particle filter temperature $T_{DPF}$ 304 due to the HC slip, which means that the substantially constant filter temperature $T_{DPF}$ 304 can be achieved during the active phase of the regeneration.

In practice, the set-point value $T_{in\_DPF\_bör}$ 303 for the inlet temperature is calculated continuously on the basis of the predetermined target level, i.e. on the basis of a desired temperature $T_{DPF}$ 304 in the particle filter 202, and on the basis of prevailing circumstances across the catalyst which are indicated by the relationship, i.e. by the model of the catalyst's fuel combustion function. A PID regulator is activated when the target level is reached in the filter, and works thereafter to keep an inlet temperature $T_{in\_DPF}$ which itself keeps the temperature $T_{DPF}$ in the filter around the target level. Catering for the effectiveness of the catalyst by utilising the defined relationship makes it possible to achieve a uniform and stable temperature in the particle filter 202 throughout the active stage of the regeneration process. This is highly advantageous, since the soot accumulates in the filter, which is also where the temperature has to be kept stable to achieve effective regeneration and avoid uncontrolled temperature increase.

According to an embodiment of the present invention, the relationship, i.e. the model of the fuel combustion function of the oxidation catalyst 205, is defined such that the amount of fuel passing unburnt through the catalyst depends on an exhaust mass flow through the particle filter 202 and/or a catalyst inlet temperature $T_{in\_DOC}$. The result is a good approximation of the HC slip, whereby effective regulation of the temperature $T_{DPF}$ in the filter may also be achieved.

There are various possible ways of determining the exhaust mass flow through the particle filter 202. It may for example be determined by means of a mass flow sensor 214 adapted to being able to measure the exhaust flow, i.e. to coming into contact with the flow through the exhaust cleaning system. As illustrated in Figure 2, the mass flow sensor 214 may be situated at the inlet to the engine so that it comes into contact with air drawn into the engine. In the case of vehicles still equipped with mass flow sensors 214, this embodiment is cost-effective in making it easy to arrive at this value for the exhaust mass flow without further changes to the system.

The exhaust mass flow through the particle filter 202 may also be determined by using an efficiency model for the engine 101, which model may be based on a pressure and/or temperature of air which is drawn into said engine 101. This embodiment is advantageous in vehicles not equipped with mass flow sensors 214.

These embodiments for determination of the exhaust mass flow make it possible to arrive at exact values for the exhaust mass flow.

As above, the relationship between the inlet temperature $T_{in\_DPF}$ and the temperature $T_{DPF}$ in the particle filter 202, i.e. the model of the oxidation catalyst's fuel combustion function, depends also on the heat generated when the HC slip burns in the particle filter.

This relationship depends, according to an embodiment of the invention, on a difference between the temperature $T_{DPF}$ in the particle filter 202 and the inlet temperature $T_{in\_DOC}$ to the oxidation catalyst 205, which is used in the regulation to achieve a relatively uniform and steady temperature $T_{DPF}$ in the particle filter during the active part of the regeneration.

The relationship is defined, according to an embodiment, as

$$T_{in\_DPF} = T_{DPF} - f\left(\dot{m}_{avg}, T_{in\_DOC}\right) \times \Delta T \qquad (eq. \ 3)$$

which uses the fact that the temperature increase in the particle filter 202 depends on the proportion of fuel which burns, and in which $T_{in\_DPF}$ and $T_{DPF}$ are respectively the filter inlet temperature and the filter temperature, $\dot{m}_{avg}$ is the exhaust mass flow through the filter, which may be determined by means of mass flow sensors 214 or efficiency model as above, $T_{in\_DOC}$ is the inlet temperature to the oxidation catalyst 205, and $f(\dot{m}_{avg}, T_{in\_DOC})$ is a function which depends on the exhaust mass flow $\dot{m}_{avg}$ and the catalyst inlet temperature

$T_{in\_DOC}$ and which estimates the proportion of fuel $R_{oförbränt\_HC}$ which passes unburnt through the catalyst.

In other words, $f(\dot{m}_{avg}, T_{in\_DOC})$ expresses the proportion of fuel $R_{oförbränt\_HC}$ which does not burn up in the catalyst, the variables involved being the exhaust mass flow $\dot{m}_{avg}$ and the catalyst inlet temperature $T_{in\_DOC}$. As specialists in the field will appreciate, the function $f(\dot{m}_{avg}, T_{in\_DOC})$ may have any suitable configuration which results in a good estimate of the proportion of fuel $R_{oförbränt\_HC}$ which passes unburnt through the catalyst. For example, the function $f(\dot{m}_{avg}, T_{in\_DOC})$ may take the form of a correlation of measured or estimated values of the unburnt proportion of fuel $R_{oförbränt\_HC}$ with various measured or estimated values of the exhaust mass flow $\dot{m}_{avg}$ and the catalyst inlet temperature $T_{in\_DOC}$.

The function $f(\dot{m}_{avg}, T_{in\_DOC})$ may also be configured as an equation which expresses the proportion of unburnt fuel $R_{oförbränt\_HC}$ as depending on the exhaust mass flow $\dot{m}_{avg}$ and the catalyst inlet temperature $T_{in\_DOC}$. The proportion of unburnt fuel $R_{oförbränt\_HC}$ may then for example be calculated as

$$R_{oförbränt\_HC} = f\left(\dot{m}_{avg}, T_{in\_DOC}\right) = (1 - e^{-\frac{k}{T_{in\_DOC}^{l}}}) * \frac{\dot{m}_{avg}(ref)}{\dot{m}_{avg}} \qquad (eq.4)$$

where k, $l$ are constants of the function and $\dot{m}_{avg}(ref)$ is a constant which represents a reference exhaust mass flow.

$\Delta T$ represents in equation 3 the difference between the temperature $T_{DPF}$ in the particle filter and the inlet temperature $T_{in\_DOC}$ to the oxidation catalyst, in other words

$$\Delta T = T_{DPF} - T_{in\_DOC} \qquad (eq. \ 5)$$

The term $f(\dot{m}_{avg}, T_{in\_DOC}) \times \Delta T$ in equation 3 therefore expresses the relationship between the filter temperature $T_{DPF}$ and the filter inlet temperature $T_{in\_DPF}$ as a number of degrees of difference.

Using the relationship, i.e. the model for the oxidation catalyst's fuel combustion function according to equation 3 makes it possible for the regulation of the filter temperature $T_{DPF}$ to be achieved indirectly by regulation of the inlet temperature $T_{in\_DPF}$, thereby achieving quicker response time and consequently quicker regulation as a result of reduced thermal inertia. It has been found that the present invention achieves a marked increase in accuracy of stability of the filter temperature $T_{DPF}$. Thus a suitable temperature $T_{DPF}$ in the particle filter can be reached and also be kept stable owing to the quicker response time.

As described above, the present invention relates mainly to regulation of the temperature $T_{DPF}$ in the particle filter 202. The temperature $T_{DPF}$ in the filter constitutes in this regulation a substantially theoretical target value around which it is desirable that the regulation should seek to keep the temperature in the filter. During the actual regulation there is therefore really no need to determine the actual temperature $T_{DPF}$ in the particle filter, what is important is to keep it substantially constant, thereby minimising the influence of the mass inertia. It is however advantageous when calibrating this substantially theoretical target value to be able to determine the temperature $T_{DPF}$ in the particle filter. According to a further embodiment of the present invention, the relationship, i.e. the model of the oxidation catalyst's function with regard to fuel combustion, indicates that the temperature $T_{DPF}$ in the particle filter represents an average of the inlet temperature $T_{in\_DPF}$ to the particle filter 202 and a measured temperature $T_{DPF\_mätt}$ of the filter determined by the temperature sensor 212 which is situated downstream from the particle filter and is in contact with the exhaust gases. Using an average temperature is advantageous in that different parts of the filter may be at different temperatures, since the temperature in its various parts may for example depend on hydrocarbons burning upstream in the filter, resulting in heat further downstream in the filter.

According to another embodiment of the invention, the temperature $T_{DPF}$ in the particle filter 202 is determined on the basis of a measured filter temperature $T_{DPF\_mätt}$ determined by means of the temperature sensor 212 which is situated downstream from the filter and is in contact with the exhaust gases. This embodiment affords an advantage in that it can be implemented with minimal increase in computational complexity.

It should be noted, and this applies generally to the present description and claims, that the fact that a temperature sensor is "in contact with" the exhaust gases may of course cover all applicable forms of direct and/or indirect thermal contact/transfer/conduction between the exhaust gases and the temperature sensor.

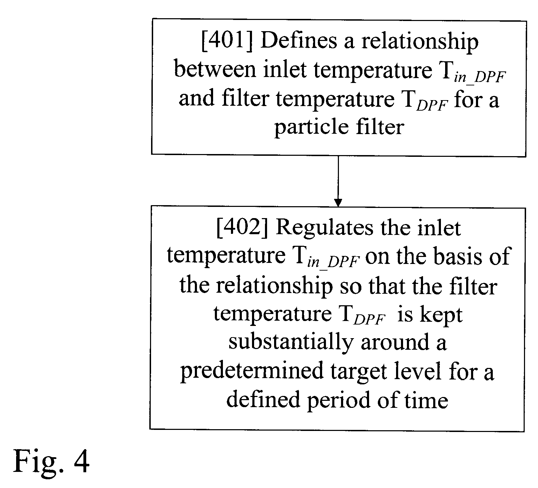

Figure 4 is a flowchart for the method according to the present invention. A first step 401 of the method defines a relationship between an inlet temperature to the particle filter 202 and a temperature in the filter. According to the present invention, this relationship depends on an amount of fuel which passes unburnt through the oxidation catalyst 205, i.e. it depends on the HC slip. The relationship may therefore be regarded as a model of the catalyst's function with regard to fuel combustion.

A second step 402 of the method uses this relationship to regulate the inlet temperature $T_{in\_DPF}$ to the particle filter so that the temperature $T_{DPF}$ in the filter is kept substantially around a predetermined target level for a defined period of time. The regulation is based here on the defined relationship. When the invention is applied in regeneration, the temperature $T_{DPF}$ in the filter is kept substantially constant around a target level which is favourable to effective regeneration for a period of time which represents the active stage of the regeneration.

The present invention relates also to a system for regulating a temperature $T_{DPF}$ in the particle filter 202. The system comprises a definition means adapted to defining a relationship between the inlet temperature $T_{in\_DPF}$ to the filter and said temperature $T_{DPF}$ in the filter. This relationship depends, as described above, on the HC slip, i.e. on the amount of fuel which passes unburnt through the oxidation catalyst 205. The system further comprises a regulating means adapted to regulating the inlet temperature $T_{in\_DPF}$ on the basis of this relationship between the inlet temperature $T_{in\_DPF}$ and the temperature $T_{DPF}$ in the filter whereby the latter can be kept substantially around a predetermined target level for a defined period of time.

The system is further adapted to comprising means for effecting the various embodiments described above of the method according to the invention.

The invention further relates to a vehicle according to Figure 1a which is provided with a particle filter 202 and a system according to the invention, which system is adapted to effecting the regulation of the temperature in the particle filter by the method according to the embodiments described above of the invention.

As specialists in the field will appreciate, the present invention may be used in substantially all applications where fuel is added in the exhaust gases and where a desired temperature $T_{DPF}$ has to be reached and maintained in the particle filter 202. The model for the oxidation catalyst's fuel combustion function, i.e. the relationship between the inlet temperature $T_{in\_DPF}$ and the filter temperature $T_{DPF}$ may therefore be used in various different applications, e.g. in rapid warming of components situated downstream from the particle filter by means of HC injection, or in desulphurisation of oxidation catalysts and/or particle filters, which is with advantage done at constant temperature between 400 and 500°C for a specific period of time.

The present invention is exemplified above in relation to vehicles. The invention is nevertheless also applicable to any other means of transport in which exhaust cleaning systems as above are applicable, e.g. watercraft or aircraft.

**Claims**

1. A method for regulating a temperature $T_{DPF}$ in a particle filter (202) which is situated downstream of an oxidation catalyst (205) in an exhaust cleaning system (200) and has an inlet temperature $T_{in\_DPF}$ which is determined at a point between said oxidation catalyst (205) and said particle filter (202), **characterised in that**

   - a relationship between said inlet temperature $T_{in\_DPF}$ to said particle filter (202) and said temperature $T_{DPF}$ in said particle filter (202) is defined, which relationship indicates how said temperature $T_{DPF}$ in said particle filter (202) changes relative to changes of said inlet temperature $T_{in\_DPF}$ and is comprised in a model for a fuel combustion function of said oxidation catalyst (205), thereby depending on an amount of fuel, which during active regeneration of said particle filter (202) is added to exhaust gases and is intended to burn up in said oxidation catalyst (205), but passes unburned through said oxidation catalyst and is oxidised by use of active material being coated on said particle filter (202), and
   - said inlet temperature $T_{in\_DPF}$ to said particle filter (202) is regulated during said active regeneration on the basis of said relationship so that said temperature $T_{DPF}$ in said particle filter (202) is kept substantially around a predetermined target level for a defined period of time.

2. A method according to claim 1, whereby said amount of fuel which passes unburnt through said oxidation catalyst (205) depends on

- an exhaust mass flow through said particle filter (202) and/or
- an inlet temperature $T_{in\_DOC}$ to said oxidation catalyst (205).

3. A method according to claim 2, whereby said exhaust mass flow is determined by means of a mass flow sensor (214) which is arranged to come into contact with air drawn into an engine connected to said exhaust cleaning system (200).

4. A method according to claim 2, whereby said exhaust mass flow is determined by means of an efficiency model for an engine connected to said exhaust cleaning system (200).

5. A method according to claim 4, whereby said efficiency model is based on a pressure and/or temperature of air which is drawn into said engine.

6. A method according to any one of claims 1-5, whereby said inlet temperature $T_{in\_DPF}$ to said particle filter (202) and/or an inlet temperature $T_{in\_DOC}$ to said oxidation catalyst (205) are determined by means of at least one temperature sensor (210, 211) which is in contact with exhaust gases in said exhaust cleaning system (200).

7. A method according to any one of claims 1-6, whereby said relationship depends on an amount of heat generated when said amount of fuel which passes unburnt through said oxidation catalyst (205) burns in said particle filter (202).

8. A method according to any one of claims 1-7, whereby said relationship depends on a difference between said temperature $T_{DPF}$ in said particle filter (202) and an inlet temperature $T_{in\_DOC}$ to said oxidation catalyst.

9. A method according to any one of claims 1-8, whereby said relationship is defined as

$$T_{in\_DPF} = T_{DPF} - f\left(\dot{m}_{avg}, T_{in\_DOC}\right) \times \Delta T$$

in which

- $T_{in\_DPF}$ is said inlet temperature to said particle filter (202),
- $T_{DPF}$ is said temperature in said particle filter (202),
- $\dot{m}_{avg}$ is a exhaust mass flow through said particle filter (202),
- $T_{in\_DOC}$ is an inlet temperature to said oxidation catalyst (205),
- $f(\dot{m}_{avg}, T_{in\_DOC})$ is a function which depends on the exhaust mass flow $\dot{m}_{avg}$ and the catalyst inlet temperature $T_{in\_DOC}$ and which estimates the proportion of fuel $R_{oförbränt\_HC}$ which passes unburnt through the oxidation catalyst, and
- $\Delta T$ is the difference between said temperature $T_{DPF}$ in said particle filter (202) and an inlet temperature to said oxidation catalyst $T_{in\_DOC}$.

10. A method according to any one of claims 1-7, whereby a measured temperature $T_{DPF\_mätt}$ in said particle filter (202) is determined by means of a temperature sensor (212) at a point downstream from said particle filter (202).

11. A method according to claim 10, whereby said relationship indicates that said temperature $T_{DPF}$ in said particle filter (202) represents an average of said temperature $T_{in\_DPF}$ of said particle filter (202) and said measured temperature $T_{DPF\_mätt}$ of said particle filter (202).

12. A method according to any one of claims 1-11, whereby said predetermined target level is within the range 400°C to 650°C.

13. A method according to claim 12, whereby said defined period of time covers an active stage of said regeneration and is long enough to ensure that said regeneration is completed.

14. A computer programme which comprises programme code and which, when said code is executed in a computer, causes said computer to apply the method according to any of claims 1-13.

**15.** A computer programme product comprising a computer-readable medium and a computer programme according to claim 14, which programme is contained in said medium which takes the form of any from among ROM (read-only memory), PROM (programmable ROM), EPROM (erasable PROM), flash-memory, EEPROM (electrically EPROM) and hard disc unit.

**16.** A system for regulating a temperature $T_{DPF}$ in a particle filter (202) which is situated downstream of an oxidation catalyst (205) in an exhaust cleaning system (200) and has an inlet temperature $T_{in\_DPF}$, which system comprises temperature means adapted to determining said inlet temperature $T_{in\_DPF}$ at a point between said oxidation catalyst (205) and said particle filter (202),

**characterised by**

- definition means adapted to defining between said inlet temperature $T_{in\_DPF}$ to said particle filter (202) and said temperature $T_{DPF}$ in said particle filter (202) a relationship, which relationship indicates how said temperature $T_{DPF}$ in said particle filter (202) changes relative to changes of said inlet temperature $T_{in\_DPF}$ and is comprised in a model for a fuel combustion function of said oxidation catalyst (205), thereby depending on the amount of fuel, which during active regeneration of said particle filter (202) is added to exhaust gases and is intended to burn up in said oxidation catalyst (205), but passes unburned through said oxidation catalyst and is oxidised by use of active material being coated on said particle filter (202), and
- regulating means adapted to regulate said inlet temperature $T_{in\_DPF}$ to said particle filter (202) on the basis of said relationship during said active regeneration so that said temperature $T_{DPF}$ in said particle filter (202) is kept substantially around a predetermined target level for a defined period of time.

**17.** A vehicle (100) **characterised in that** it comprises

- a particle filter (202), and
- a system for regulating said temperature $T_{DPF}$ in said particle filter (202) according to claim 16.

**Patentansprüche**

**1.** Verfahren zum Regulieren einer Temperatur $T_{DPF}$ in einem Partikelfilter (202), der stromabwärts eines Oxidationskatalysators (205) in einem Abgasreinigungssystem (200) angeordnet ist und eine Eintrittstemperatur $T_{in\_DPF}$ aufweist, die an einem Punkt zwischen dem Oxidationskatalysator (205) und dem Partikelfilter (202) bestimmt wird, **gekennzeichnet dadurch, dass**

- ein Zusammenhang zwischen der Eintrittstemperatur $T_{in\_DPF}$ an dem Partikelfilter (202) und der Temperatur $T_{DPF}$ in dem Partikelfilter (202) definiert ist, wobei der Zusammenhang angibt, wie sich die Temperatur $T_{DPF}$ in dem Partikelfilter (202) hinsichtlich der Eintrittstemperaturänderungen $T_{in\_DPF}$ ändert und in einem Modell für eine Kraftstoffverbrauchsfunktion des Oxidationskatalysators (205) umfasst ist, wobei eine Abhängigkeit von der Kraftstoffmenge besteht, die während der aktiven Regeneration des Partikelfilters (202) den Abgasen zugefügt wird und dazu gedacht ist, in dem Oxidationskatalysator (205) zu verbrennen, aber den Oxidationskatalysator unverbrannt durchläuft und mittels einem aktiven Material oxidiert wird, das auf dem Partikelfilter (202) beschichtet ist, und
- die Eintrittstemperatur $T_{in\_DPF}$ an dem Partikelfilter (202) während der aktiven Regeneration auf Grundlage des Zusammenhangs reguliert wird, so dass die Temperatur in dem Partikelfilter (202) im Wesentlichen für einen bestimmten Zeitabschnitt um ein vorbestimmtes Sollniveau gehalten wird.

**2.** Verfahren nach Anspruch 1, wobei die Kraftstoffmenge, die den Oxidationskatalysator (205) unverbrannt durchläuft, abhängig ist von

- einem Abgasmassenstrom durch den Partikelfilter (202) und/oder
- einer Eintrittstemperatur $T_{in\_DOC}$ an dem Oxidationskatalysator (205).

**3.** Verfahren nach Anspruch 2, wobei der Abgasmassenstrom mittels eines Massenstromsensors (214) bestimmt wird, der angeordnet ist, um mit Luft in Berührung zu kommen, die in einem mit dem Abgasreinigungssystem (200) verbunden Motor gesaugt wird.

**4.** Verfahren nach Anspruch 2, wobei der Abgasmassenstrom mittels eines Effizienzmodells für einen mit dem Abgasreinigungssystem (200) verbundenen Motor bestimmt wird.

**5.** Verfahren nach Anspruch 4, wobei das Effizienzmodell auf einem Druck und/oder einer Lufttemperatur basiert, die in den Motor gesaugt wird.

**6.** Verfahren nach einem der Ansprüche 1 bis 5, wobei die Eintrittstemperatur $T_{in\_DPF}$ an dem Partikelfilter (202) und/oder die Eintrittstemperatur $T_{in\_DOC}$ an dem Oxidationskatalysator (205) mittels wenigstens einem Temperatursensor (210, 211) bestimmt wird, der mit Abgasen im Abgasreinigungssystem (200) in Kontakt kommt.

**7.** Verfahren nach einem der Ansprüche 1 bis 6, wobei der Zusammenhang von einer Wärmemenge abhängt, die erzeugt wird, wenn die Kraftstoffmenge den Oxidationskatalysator (205) unverbrannt durchläuft und in dem Partikelfilter (202) verbrennt.

**8.** Verfahren nach einem der Ansprüche 1 bis 7, wobei der Zusammenhang von einer Differenz zwischen der Temperatur $T_{DPF}$ in dem Partikelfilter (202) und der Eintrittstemperatur $T_{in\_DOC}$ an dem Oxidationskatalysator abhängt.

**9.** Verfahren nach einem der Ansprüche 1 bis 8, wobei der Zusammenhang definiert ist als

$$T_{in\_DPF} = T_{DPF} - f(\dot{m}_{avg}, T_{in\_DOC}) \times \Delta T$$

wobei

- $T_{in\_DPF}$ die Eintrittstemperatur an dem Partikelfilter (202) ist,
- $T_{DPF}$ die Temperatur in dem Partikelfilter (202) ist,
- $\dot{m}_{avg}$ ein Abgasmassenstrom durch den Partikelfilter (202) ist,
- $T_{in\_DOC}$ eine Eintrittstemperatur an dem Oxidationskatalysator (205) ist,
- $f(\dot{m}_{avg}, T_{in\_DOC})$ eine Funktion ist, die von dem Abgasmassenstrom $\dot{m}_{avg}$ und der Katalysatoreintrittstemperatur $T_{in\_DOC}$ abhängig ist, und die das Verhältnis von Kraftstoff $R_{oförbränt\_HC}$ schätzt, welches unverbrannt den Oxidationskatalysator durchläuft, und
- $\Delta T$ die Differenz der Temperatur $T_{DPF}$ in dem Partikelfilter (202) und einer Eintrittstemperatur $T_{in\_DOC}$ an dem Oxidationskatalysator ist.

**10.** Verfahren nach einem der Ansprüche 1 bis 7, wobei eine gemessene Temperatur $T_{DPF\_mätt}$ in dem Partikelfilter (202) mittels eines Temperatursensors (212) an einem Punkt stromabwärts von dem Partikelfilter (202) bestimmt wird.

**11.** Verfahren nach Anspruch 10, wobei der Zusammenhang angibt, dass die Temperatur $T_{DPF}$ in dem Partikelfilter (202) einen Durchschnitt der Temperatur $T_{in\_DPF}$ des Partikelfilters (202) und der gemessenen Temperatur $T_{DPF\_mätt}$ des Partikelfilters (202) repräsentiert.

**12.** Verfahren nach einem der Ansprüche 1 bis 11, wobei das vorbestimmte Sollniveau innerhalb des Bereichs von 400°C bis 650°C liegt.

**13.** Verfahren nach Anspruch 12, wobei der bestimmte Zeitabschnitt einen aktiven Abschnitt der Regeneration abdeckt und lang genug ist, um sicherzustellen, dass die Regeneration abgeschlossen ist.

**14.** Computerprogramm, das einen Programmcode umfasst, und das dann, wenn der Code in einem Computer ausgeführt wird, den Computer dazu veranlasst, das Verfahren nach einem der Ansprüche 1-13 auszuführen.

**15.** Computerprogrammprodukt, umfassend ein computerlesbares Medium und ein Computerprogramm nach Anspruch 14, wobei das Programm in dem Medium enthalten ist, das die Form von einem beliebigen ROM (Festspeicher), PROM (programmierbarer Festspeicher), EPROM (löschbarer programmierbarer Festspeicher), Flash-Speicher, EEPROM (elektronisch löschbarer programmierbarer Festspeicher) und einer Festplatteneinheit annimmt.

**16.** System zum Regulieren einer Temperatur $T_{DPF}$ in einem Partikelfilter (202), der stromabwärts eines Oxidationskatalysators (205) in einem Abgasreinigungssystem (200) angeordnet ist und eine Eintrittstemperatur $T_{in\_DPF}$ aufweist,

**EP 2 612 002 B1**

wobei das System ein Temperaturmittel umfasst, das dazu geeignet ist, die Eintrittstemperatur $T_{in\_DPF}$ an einem Punkt zwischen dem Oxidationskatalysator (205) und dem Partikelfilter (202) zu bestimmen, **gekennzeichnet durch**

- ein Definitionsmittel, das dazu geeignet ist, zwischen der Eintrittstemperatur $T_{in\_DPF}$ an dem Partikelfilter (202) und der Temperatur $T_{DPF}$ in dem Partikelfilter einen Zusammenhang zu definieren, wobei der Zusammenhang angibt, wie sich die Temperatur $T_{DPF}$ in dem Partikelfilter (202) hinsichtlich der Eintrittstemperaturänderungen $T_{in\_DPF}$ ändert, und in einem Modell für eine Kraftstoffverbrauchsfunktion des Oxidationskatalysators (205) umfasst ist, wobei eine Abhängigkeit besteht von einer Kraftstoffmenge, die während der aktiven Regeneration des Partikelfilters (202) den Abgasen zugefügt wird und dazu bestimmt ist, in dem Oxidationskatalysator (205) zu verbrennen, aber den Oxidationskatalysator unverbrannt durchläuft und mittels aktiven Material oxidiert wird, das auf dem Partikelfilter (202) beschichtet ist, und
- ein Reguliermittel, das dazu geeignet ist, die Eintrittstemperatur $T_{in\_DPF}$ an dem Partikelfilter (202) während der aktiven Regeneration auf Grundlage des Zusammenhangs zu regulieren, so dass die Temperatur in dem Partikelfilter (202) im Wesentlichen für einen bestimmten Zeitabschnitt um ein vorbestimmtes Sollniveau gehalten wird.

17. Fahrzeug (100) **dadurch gekennzeichnet, dass** es

- einen Partikelfilter (202), und
- ein System zum Regulieren der Temperatur $T_{DPF}$ in dem Partikelfilter (202) nach Anspruch 16 umfasst.

**Revendications**

1. Procédé pour réguler une température $T_{DPF}$ dans un filtre à particules (202) qui est situé en aval d'un catalyseur d'oxydation (205) dans un système de nettoyage d'échappement (200) et qui a une température d'entrée $T_{in\_DPF}$ qui est déterminée en un point entre ledit catalyseur d'oxydation (205) et ledit filtre à particules (202), **caractérisé en ce que** :

- une relation entre ladite température d'entrée $T_{in\_DPF}$ dudit filtre à particules (202) et ladite température $T_{DPF}$ dans ledit filtre à particules (202) est définie, cette relation indiquant la façon dont ladite température $T_{DPF}$ dans ledit filtre à particules (202) change par rapport à des changements de ladite température d'entrée $T_{in\_DPF}$ et étant comprise dans un modèle pour une fonction de combustion de carburant dudit catalyseur d'oxydation (205), de façon à dépendre ainsi d'une quantité de carburant, qui, durant une régénération active dudit filtre à particules (202), est ajoutée à des gaz d'échappement et est conçue pour brûler dans ledit catalyseur d'oxydation (205), mais qui passe imbrûlée à travers ledit catalyseur d'oxydation, et qui est oxydée à l'aide d'un matériau actif dont est revêtu ledit filtre à particules (202), et
- ladite température d'entrée $T_{in\_DPF}$ dudit filtre à particules (202) est régulée durant ladite régénération active en fonction de ladite relation, de telle sorte que ladite température $T_{DPF}$ dans ledit filtre à particules (202) soit maintenue sensiblement autour d'un niveau cible prédéterminé pendant une période de temps définie.

2. Procédé selon la revendication 1, dans lequel ladite quantité de carburant qui passe imbrûlée à travers ledit catalyseur d'oxydation (205) dépend de :

- un écoulement massique d'échappement à travers ledit filtre à particules (202), et/ou
- une température d'entrée $T_{in\_DOC}$ dudit catalyseur d'oxydation (205).

3. Procédé selon la revendication 2, dans lequel ledit écoulement massique d'échappement est déterminé à l'aide d'un capteur d'écoulement massique (214) qui est agencé de façon à venir en contact avec de l'air aspiré dans un moteur relié audit système de nettoyage d'échappement (200).

4. Procédé selon la revendication 2, dans lequel ledit écoulement massique d'échappement est déterminé au moyen d'un modèle de rendement pour un moteur relié audit système de nettoyage d'échappement (200).

5. Procédé selon la revendication 4, dans lequel ledit modèle de rendement est basé sur une pression et/ou une température d'air qui est aspiré dans ledit moteur.

6. Procédé selon l'une quelconque des revendications 1 à 5, dans lequel ladite température d'entrée $T_{in\_DPF}$ dudit

13

filtre à particules (202) et/ou une température d'entrée $T_{in\_DOC}$ dudit catalyseur d'oxydation (205) sont déterminées au moyen d'au moins un capteur de température (210, 211) qui est en contact avec des gaz d'échappement dans ledit système de nettoyage d'échappement (200).

7. Procédé selon l'une quelconque des revendications 1 à 6, dans lequel ladite relation dépend d'une quantité de chaleur générée lorsque ladite quantité de carburant qui passe imbrûlée à travers ledit catalyseur d'oxydation (205) brûle dans ledit filtre à particules (202).

8. Procédé selon l'une quelconque des revendications 1 à 7, dans lequel ladite relation dépend d'une différence entre ladite température $T_{DPF}$ dans ledit filtre à particules (202) et une température d'entrée $T_{in\_DOC}$ duditcatalyseur d'oxydation.

9. Procédé selon l'une quelconque des revendications 1 à 8, dans lequel ladite relation est définie par :

$$T_{in\_DPF} = T_{DPF} - f(\dot{m}_{avg}, T_{in\_DOC}) \times \Delta T$$

où :

- $T_{in\_DPF}$ est ladite température d'entrée sur dudit filtre à particules (202),
- $T_{DPF}$ est ladite température dans ledit filtre à particules (202),
- $\dot{m}_{avg}$ est un écoulement massique d'échappement à travers ledit filtre à particules (202),
- $T_{in\_DOC}$ est une température d'entrée dudit catalyseur d'oxydation (205),
- $f(\dot{m}_{avg}, T_{in\_DOC})$ est une fonction qui dépend de l'écoulement massique $\dot{m}_{avg}$ et de la température d'entrée de catalyseur $T_{in\_DOC}$ et qui estime la proportion de carburant $R_{oförbränt\_HC}$ qui passe imbrûlée à travers le catalyseur d'oxydation, et
- $\Delta T$ est la différence entre ladite température $T_{DPF}$ dans ledit filtre à particules (202) et une température d'entrée dudit catalyseur d'oxydation $T_{in\_DOC}$.

10. Procédé selon l'une quelconque des revendications 1 à 7, dans lequel une température mesurée $T_{DPF\_mätt}$ dans ledit filtre à particules (202) est déterminée à l'aide d'un capteur de température (212) en un point situé en aval dudit filtre à particules (202).

11. Procédé selon la revendication 10, dans lequel ladite relation indique que ladite température $T_{DPF}$ dans ledit filtre à particules (202) représente une moyenne de ladite température $T_{in\_DPF}$ dudit filtre à particules (202) et de ladite température mesurée $T_{DPF\_mätt}$ dudit filtre à particules (202).

12. Procédé selon l'une quelconque des revendications 1 à 11, dans lequel ledit niveau cible prédéterminé se trouve à l'intérieur de la plage comprise entre 400° C et 650° C.

13. Procédé selon la revendication 12, dans lequel ladite période de temps définie couvre un stade actif de ladite régénération et est suffisamment longue pour assurer que ladite régénération soit achevée.

14. Programme informatique, qui comprend un code de programme, et qui, lorsque ledit code est exécuté dans un ordinateur, provoque l'application par ledit ordinateur du procédé selon l'une quelconque des revendications 1 à 13.

15. Produit de programme informatique comprenant un support lisible par un ordinateur et un programme informatique selon la revendication 14, ce programme étant contenu dans ledit support, qui prend la forme de l'une quelconque parmi une ROM (mémoire morte), une PROM (mémoire morte programmable), une EPROM (mémoire morte programmable effaçable), une mémoire flash, une EEPROM (mémoire morte programmable effaçable électriquement), et une unité de disque dur.

16. Système pour réguler une température $T_{DPF}$ dans un filtre à particules (202) qui est situé en aval d'un catalyseur d'oxydation (205) dans un système de nettoyage d'échappement (200) et qui a une température d'entrée $T_{in\_DPF}$, ce système comprenant des moyens de température adaptés de façon à déterminer ladite température d'entrée $T_{in\_DPF}$ en un point situé entre ledit catalyseur d'oxydation (205) et ledit filtre à particules (202), **caractérisé par** :

EP 2 612 002 B1

- des moyens de définition, adaptés de façon à définir entre ladite température d'entrée $T_{in\_DPF}$ dudit filtre à particules (202) et ladite température $T_{DPF}$ dans ledit filtre à particules (202) une relation, cette relation indiquant la façon dont ladite température $T_{DPF}$ dans ledit filtre à particules (202) change par rapport à des changements de ladite température d'entrée $T_{in\_DPF}$ et étant comprise dans un modèle pour une fonction de combustion de carburant dudit catalyseur d'oxydation (205), de façon à dépendre ainsi de la quantité de carburant, qui, durant une régénération active dudit filtre à particules (202), est ajoutée à des gaz d'échappement et est conçue pour brûler dans ledit catalyseur d'oxydation (205), mais qui passe imbrûlée à travers ledit catalyseur d'oxydation, et qui est oxydée à l'aide d'un matériau actif dont est revêtu ledit filtre à particules (202), et

- des moyens de régulation, adaptés de façon à réguler ladite température d'entrée $T_{in\_DPF}$ dudit filtre à particules (202) en fonction de ladite relation durant ladite régénération active, de telle sorte que ladite température $T_{DPF}$ dans ledit filtre à particules (202) soit maintenue sensiblement autour d'un niveau cible prédéterminé pendant une période de temps définie.

17. Véhicule (100), **caractérisé en ce qu'**il comprend :

- un filtre à particules (202), et
- un système pour réguler ladite température $T_{DPF}$ dans ledit filtre à particules (202) selon la revendication 16.

15

EP 2 612 002 B1

FIG. 1a

100

111

113

104

103

102

106

101

107

108

200

112

105

114

Fig. 1b

# Fig. 2

Temp. (°C)

Fig. 3a

Temp. (°C)

Fig. 3b

[401] Defines a relationship between inlet temperature $T_{in\_DPF}$ and filter temperature $T_{DPF}$ for a particle filter

[402] Regulates the inlet temperature $T_{in\_DPF}$ on the basis of the relationship so that the filter temperature $T_{DPF}$ is kept substantially around a predetermined target level for a defined period of time

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080155965 A1